(19) Europäisches Patentamt
European Patent Office
Office européen des brevets

(11) **EP 4 474 492 A1**

(12) **EUROPEAN PATENT APPLICATION**
published in accordance with Art. 153(4) EPC

(43) Date of publication:
**11.12.2024 Bulletin 2024/50**

(21) Application number: 23756291.3

(22) Date of filing: **10.02.2023**

(51) International Patent Classification (IPC):
***C21D 8/12*** *(2006.01)*   ***C22C 38/00*** *(2006.01)*
***C22C 38/60*** *(2006.01)*   ***H01F 1/147*** *(2006.01)*

(52) Cooperative Patent Classification (CPC):
**C21D 8/12; C22C 38/00; C22C 38/06; C22C 38/60;**
**H01F 1/147;** Y02P 10/20

(86) International application number:
**PCT/JP2023/004544**

(87) International publication number:
**WO 2023/157765 (24.08.2023 Gazette 2023/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.02.2022 JP 2022021370**

(71) Applicant: JFE Steel Corporation
Tokyo 100-0011 (JP)

(72) Inventors:
• **TAKENAKA Masanori**
  **Tokyo 100-0011 (JP)**
• **IMAMURA Takeshi**
  **Tokyo 100-0011 (JP)**
• **TANAKA Takaaki**
  **Tokyo 100-0011 (JP)**

(74) Representative: **Haseltine Lake Kempner LLP**
**One Portwall Square**
**Portwall Lane**
**Bristol BS1 6BH (GB)**

(54) **METHOD FOR PRODUCING GRAIN-ORIENTED ELECTROMAGNETIC STEEL SHEET**

(57)   Provided is a method for producing a grain-oriented electrical steel sheet, including heating a steel slab containing an inhibitor-forming ingredient; hot rolling the steel slab; performing hot-band annealing as appropriate; performing cold rolling; performing primary recrystallization annealing that serves as decarburization annealing; applying an annealing separator; and performing finishing annealing. Specifically, the step of heating the steel slab includes heating the steel slab to a temperature of 900 to 1300°C, performing width reduction thereon of 50 to 200 mm on each side, performing horizontal rolling thereon, and heating the steel slab again. Provided that the surface temperatures of the widthwise central portion and widthwise edge portion of the slab after the horizontal rolling are represented by Tc (°C) and Te (°C), respectively, and the average temperature rise rate of the steel sheet in the width direction in the temperature range of 700 to 900°C during a heating process of the first annealing performed on the steel sheet after the hot rolling is represented by R (°C/s), R is controlled to satisfy $R \geq 5 + (Tc - Te)/20$. This effectively prevents the occurrence of edge cracks during the hot rolling, and prevents the occurrence of secondary recrystallization failures in the widthwise edge portion of a product sheet.

FIG. 1

Figure caption (axes): Average temperature rise rate R (°C/s) in width direction vs. Temperature difference (Tc-Te)(°C) between widthwise central portion and widthwise edge portion of slab. $R = 5 + (Tc - Te)/20$. Maximum width of secondary recrystallization failure portions — △ : more than 15mm ; ○ : more than 10mm but 15 mm or less ; ◎ : 5mm or less

EP 4 474 492 A1

**Description**

Technical Field

The present invention relates to a method for producing a so-called grain-oriented electrical steel sheet, in which, in the Miller index, the {110} surface of crystal grains are highly integrated on the sheet surface and the <001> direction thereof is highly integrated in the rolling direction.

Background Art

Grain-oriented electrical steel sheets are soft magnetic materials and are mainly used as iron cores of electrical devices, such as transformers. The grain-oriented electrical steel sheets have excellent magnetic properties such as low iron loss and high magnetic flux density, which are achieved by utilizing secondary recrystallization to allow crystal grains to be highly integrated along the {110} <001> orientation (hereinafter referred to as "Goss orientation"). As the index for evaluating the magnetic properties of grain-oriented electrical steel sheets, the following are typically used: the magnetic flux density $B_8$ (T) at a magnetic field strength of 800 (A/m), and the iron loss $W_{17/50}$ (W/kg) per 1 kg of a steel sheet when magnetization is performed up to 1.7 (T) with an alternating-current magnetic field of 50 (Hz) as the excitation frequency.

Such a grain-oriented electrical steel sheet is usually produced by a method in which fine precipitates called inhibitors are precipitated during the final finishing annealing to impart a difference in mobility to the crystal grain boundaries, thereby preferentially growing only the Goss-orientated grains. For example, Patent Literature 1 discloses a method that involves using AlN and MnS as inhibitors, and Patent Literature 2 discloses a method that involves using MnS and MnSe as inhibitors. Each of these methods has been implemented into industrial practice. Ideally, the inhibitors in these methods are finely and uniformly dispersed. For this purpose, it is considered necessary to heat a steel slab, which is a raw material, to a high temperature of 1300°C or higher before undergoing hot rolling.

However, heating a slab to a high temperature for a long time would cause a problem such that the crystal structure of the slab would be coarsened, thus promoting the non-uniformity of the structure. To address the problem, a method as disclosed in Patent Literature 3 of heating a slab to a high temperature of about 1300 to 1450°C for a short time is proposed and is currently the mainstream. Examples of the slab heating method include induction heating and electrical heating as disclosed in Patent Literature 4 and Patent Literature 5. Applying such technologies can not only suppress the coarsening of the crystal structure but also treat the slabs individually, increasing the degree of freedom of hot rolling to be performed. Further, such technologies are considered advantageous in terms of production efficiency, and further in terms of the construction costs for facilities and the maintenance and management costs.

Meanwhile, in addition to improving the magnetic properties as described above, grain-oriented electrical steel sheets have been demanded to supply products at low costs. Thus, it is a critical challenge for manufacturers to produce high-quality products at high yields. For example, the challenge of increasing yields includes preventing edge cracks from appearing in an edge portion of a steel sheet during hot rolling.

Many technologies have been proposed as a measure to prevent edge cracks from occurring during hot rolling. For example, Patent Literature 6 proposes a method of, in a step of hot rolling a continuously cast slab of grain-oriented silicon steel, setting the difference between the start temperature and the end temperature of finishing rolling, that is, the temperature drop during hot finishing rolling to 220°C or less. However, even when the difference between the start temperature and the end temperature of the finishing rolling is controlled within such a range, the occurrence of edge cracks during rough rolling or before finishing rolling cannot be prevented.

Patent Literature 7 discloses a method of controlling the final rolling reduction of hot rough rolling, and Patent Literature 8 discloses a method of controlling the cast structure of a slab, and further, Patent Literature 9 discloses a method of forming the cross-section of a slab into a special shape. However, although the technologies disclosed in Patent Literatures 7 to 9 above are somewhat effective in preventing the occurrence of edge cracks, they have not been considered to be effective methods for completely preventing the occurrence of edge cracks. Patent Literatures 10 to 14 each disclose a method of hot rolling a grain-oriented silicon steel sheet, which prevents the occurrence of edge cracks by adjusting the side faces of a sheet bar during hot rolling. However, although the method has a substantial effect in preventing the occurrence of edge cracks as compared with the above methods, it cannot completely prevent the occurrence of edge cracks. Therefore, Patent Literature 15 proposes a method that includes heating a slab, subjecting the slab to width reduction and further to horizontal reduction, and then heating the slab again to a high temperature.

Citation List

Patent Literature

Patent Literature 1: Japanese Patent Publication No. 40-015644
Patent Literature 2: Japanese Patent Publication No. 51-013469
Patent Literature 3: Japanese Patent Laid-Open No. 60-190520
Patent Literature 4: Japanese Utility Model Publication No. 58-024397
Patent Literature 5: Japanese Patent Laid-Open No. 60-145318
Patent Literature 6: Japanese Patent Laid-Open No. 55-062124
Patent Literature 7: Japanese Patent Laid-Open No. 54-031024
Patent Literature 8: Japanese Patent Laid-Open No. 03-243244
Patent Literature 9: Japanese Patent Laid-Open No. 61-003837
Patent Literature 10: Japanese Patent Laid-Open No. 60-145204
Patent Literature 11: Japanese Patent Laid-Open No. 60-200916
Patent Literature 12: Japanese Patent Laid-Open No. 61-071104
Patent Literature 13: Japanese Patent Laid-Open No. 62-196328
Patent Literature 14: Japanese Patent Laid-Open No. 05-138207
Patent Literature 15: Japanese Patent Laid-Open No. 03-133501

Summary of Invention

Technical Problem

However, although the technology disclosed in Patent Literature 15, in which a slab is subjected to a width reduction process before high-temperature heating, has the effect of significantly reducing the occurrence of edge cracks in a hot-rolled sheet, a new problem has arisen. That is, the width reduction process reduces the temperatures at the widthwise edge portion of the slab, causing insufficient heating of the widthwise edge portion of the slab during the subsequent high-temperature heating. This leads to insufficient dissolution of inhibitors, and insufficient fine and uniform precipitation of the inhibitors during hot rolling. As a result, secondary recrystallization failure partially occurs at the widthwise edge portion of a product sheet. The portion with secondary recrystallization failure needs to be removed, resulting in significantly reduced yields.

The present invention has been made in view of the above problems of the conventional technologies, and it is an object of the present invention to propose a technology of, in a method for producing a grain-oriented electrical steel sheet by using AlN, MnS and/or MnSe as inhibitors, preventing the occurrence of edge cracks during hot rolling, and also effectively preventing the occurrence of secondary recrystallization failure at the widthwise edge portion of a product sheet.

Solution to Problem

As a result of diligent studies aimed at solving the above problems, the present inventors discovered a method that can prevent both the occurrence of edge cracks during hot rolling and the occurrence of secondary recrystallization failure at the widthwise edge of a product sheet. This method includes appropriately controlling the average temperature rise rate within the temperature range from 700 to 900°C in the width direction of the steel sheet during the first annealing to be performed on the steel sheet after the hot rolling, in accordance with the amount of temperature drop at the widthwise edge of the slab resulting from width reduction performed on the slab before the high-temperature heating.

The present invention based on the above insight proposes a method for producing a grain-oriented electrical steel sheet, including heating a steel slab having an ingredient composition including C: 0.02 to 0.10 mass%, Si: 2.5 to 5.5 mass%, Mn: 0.01 to 0.30 mass%, sol. Al: 0.010 to 0.040 mass%, and N: 0.004 to 0.020 mass%, and further including at least one of S and Se: 0.001 to 0.040 mass% in total, with a balance being Fe and unavoidable impurities; hot rolling the steel slab; performing one cold rolling, or two or more times of cold rolling with an intermediate annealing between each cold rolling to obtain a cold-rolled sheet with a final thickness; performing primary recrystallization annealing serving as decarburization annealing; applying an annealing separator to a surface of the resulting steel sheet; and performing finishing annealing, characterized in that, in the step of heating the steel slab, the steel slab is heated to a temperature of 900 to 1300°C, subjected to width reduction of 50 to 200 mm on each side, subjected to horizontal rolling for flattening a dog-bone shape caused by the width reduction, reheated, and then held at a high temperature of 1300 to 1450°C for 0 to 120 minutes. The method is also characterized in that, provided that the surface temperatures of the widthwise central portion and widthwise edge portion of the slab after the width reduction and the horizontal rolling are represented by Tc (°C) and Te (°C), respectively, and that an average temperature rise rate in the width direction of the steel sheet within a temperature range of 700 to 900°C during a heating process of the first annealing performed on the steel sheet after the hot rolling is represented by R (°C/s), R satisfies the following Expression (1):

$$R \geq 5 + (Tc - Te)/20 \ ...(1)$$

In the method for producing a grain-oriented electrical steel sheet of the present invention, provided that the temperature rise rates of the widthwise central portion and widthwise edge portion of the steel sheet within the temperature range of 700 to 900°C during the heating process of the first annealing performed after the hot rolling are represented by Rc (°C/s) and Re (°C/s), respectively, Rc and Re satisfy the following Expression (2):

$$Re \geq Rc \ ... \ (2)$$

In the above method for producing a grain-oriented electrical steel sheet of the present invention, Tc and Te satisfy the following Expression (3):

$$10 \leq (Tc - Te) \leq 100 \ ...(3),$$

and
Rc and Re satisfy the following Expression (4):

$$(Re - Rc) \geq (Tc - Te)/50 \ ...(4)$$

The above method for producing a grain-oriented electrical steel sheet of the present invention includes one of the following steps:

-   a hot rolling step that includes, after heating the steel slab, performing rough rolling for one or more passes in a temperature range of 1 100°C to 1400°C and finishing rolling for 2 or more passes in a temperature range of 800 to 1300°C to obtain a hot-rolled sheet, and then winding the hot-rolled sheet into a coil at a winding temperature of 400 to 750°C;
-   a hot-band annealing step that includes holding the sheet in a temperature range of 900 to 1250°C for 5 seconds or longer and then cooling the sheet from 800°C to 350°C at a rate of 5 to 100°C/s;
-   a cold rolling step that includes performing one cold rolling step at a total rolling reduction in a range of 50 to 92% or performing two or more cold rolling steps at a total rolling reduction of each cold rolling in a range of 50 to 92%;
-   an intermediate annealing step that includes holding the sheet in a temperature range of 900 to 1250°C for 5 seconds or longer, and then cooling the sheet at a rate of 5 to 100°C/s from 800°C to 350°C;
-   a primary recrystallization annealing step that also serves as decarburization annealing and includes holding the sheet in a temperature range of 750 to 950°C for 10 seconds or longer under a wet atmosphere containing $H_2$ and $N_2$ and having a dew point of 20 to 80°C or less;
-   an annealing separator applying step that applies 3 g/m$^2$ or more of an annealing separator composed mainly of MgO to each surface of the steel sheet; and
-   a finishing annealing step that includes purification of holding the sheet at least at a temperature of 1050 to 1300°C for 3 hours or longer and is performed in an atmosphere containing $H_2$ for a part of the temperature range of 800°C or higher.

The steel slab used for the method for producing a grain-oriented electrical steel sheet of the present invention further includes, in addition to the ingredient composition described above, at least one selected from the group consisting of Ni: more than 0 mass% but 1.00 mass% or less, Sb: more than 0 mass% but 0.50 mass% or less, Sn: more than 0 mass% but 0.50 mass% or less, Cu: more than 0 mass% but 0.50 mass% or less, Cr: more than 0 mass% but 0.50 mass% or less, P: more than 0 mass% but 0.50 mass% or less, Mo: more than 0 mass% but 0.50 mass% or less, Nb: more than 0 mass% but 0.020 mass% or less, V: more than 0 mass% but 0.010 mass% or less, B: more than 0 mass% but 0.0025 mass% or less, Bi: more than 0 mass% but 0.50 mass% or less, and Zr: more than 0 mass% but 0.10 mass% or less.

The steel slab used for the method for producing a grain-oriented electrical steel sheet of the present invention further includes, in addition to the ingredient composition, Co: more than 0 mass% but 0.0200 mass% or less.

The steel slab used for the method for producing a grain-oriented electrical steel sheet of the present invention further includes, in addition to the ingredient composition, at least one selected from the group consisting of Ti: more than 0 mass% but 0.0200 mass% or less and W: from 0.001 to 0.050 mass%.

The steel slab used for the method for producing a grain-oriented electrical steel sheet of the present invention further includes, in addition to the ingredient composition, at least one selected from the group consisting of Zn: more than 0 mass% but 0.0200 mass% or less, Pb: more than 0 mass% but 0.0100 mass% or less, As: more than 0 mass% but 0.020 mass% or less, Ag: more than 0 mass% but 0.200 mass% or less, Au: more than 0 mass% but 0.200 mass% or less, Ga: more than 0 mass% but 0.0200 mass% or less, Ge: more than 0 mass% but 0.0200 mass% or less, Ca: more than 0 mass% but 0.0200 mass% or less, Mg: more than 0 mass% but 0.0200 mass% or less, REM: more than 0 mass% but 0.0200 mass% or less, and Hf: more than 0 mass% but 0.020 mass% or less.

Advantageous Effects of Invention

The present invention can effectively prevent the occurrence of edge cracks during hot rolling and the occurrence of secondary recrystallization failure in the widthwise edge portion of a product sheet, thereby producing a grain-oriented electrical steel sheet having a high magnetic flux density and low iron loss at low cost and high yield.

Brief Description of Drawings

FIG. 1 is a graph showing the influence of (Tc - Te) and R on the maximum width of a portion having secondary recrystallization failure.
FIG. 2 is a graph showing the influence of (Tc - Te) and (Re - Rc) on the maximum width of a portion having secondary recrystallization failure.

Description of Embodiments

First, experiments that have been conducted to arrive at the present invention will be described.

<Experiment 1>

Eighteen steel slabs were produced, each having a thickness of 260 mm and having the ingredient composition including C: 0.05 mass%, Si: 3.1 mass%, Mn: 0.09 to 0.10 mass%, sol. Al: 0.020 to 0.021 mass%, N: 0.009 mass%, S: 0.002 to 0.003 mass%, and Se: 0.009 to 0.010 mass%, with the balance being Fe and unavoidable impurities. Next, the slabs were charged into a heating furnace to be heated to 1000°C, and then taken out of the heating furnace. Then, nine slabs were subjected to width reduction of 20 mm on each side, while the other nine slabs were subjected to width reduction of 50 mm on each side. Each slab was then subjected to horizontal reduction (horizontal rolling) to correct a dog-bone shape of the slab for flattening. Note that during the width reduction, the amount of temperature drop at the widthwise edge of the slab was varied by changing the contact time of the slab with the width reduction apparatus. Table 1 shows the surface temperature Tc (°C) of the widthwise central portion and the surface temperature Te (°C) of the widthwise edge portion of each slab after width reduction and horizontal rolling, and the temperature difference (Tc - Te) between Tc and Te. Note that the surface temperature of the widthwise central portion of each slab refers to the surface temperature of the central portion of the upper face (longer side) of the slab in the width direction, while the surface temperature of the widthwise edge portion of each slab refers to the temperature of the central portion of a side face (shorter side) of the slab in the thickness direction.
After that, the steel slab was charged into the heating furnace again to be heated to 1350°C, held at the temperature for 5 minutes, and then subjected to hot rough rolling to obtain a sheet bar with a thickness of 40 mm. The sheet bar was subjected to hot finishing rolling to form a hot-rolled sheet with a thickness of 2.8 mm, cooled with water, and wound into a coil at a temperature of 600°C. In this process, both widthwise edge portions of the hot-rolled sheet were continuously photographed in-line at the exit side of the hot-finishing rolling mill, and the maximum width of edge cracks generated at the widthwise edge portions of the sheet was measured from the obtained images. Table 1 shows the measurement results. As can be seen in Table 1, performing width reduction of 50 mm on each side can reduce edge cracks.
The reason why width reduction can reduce edge cracks as described above is considered as follows. Performing width reduction of 50 mm on each side of the steel slab introduces processing strain on each widthwise edge portion of the slab. Performing horizontal reduction to correct a dog-bone shape generated at the widthwise edge portion of the slab by the width reduction also introduces processing strain. As a result, the large processing strain is applied to the widthwise edge portion of the slab, and the crystal grain size at the widthwise edge portion of the slab is considered to become finer.

[Table 1]

| No. | After hot width reduction and horizontal rolling | | | | Maximum depth (mm) of edge cracks in hot-rolled sheet | Hot-band annealing | | | | Maximum width (mm) of secondary recrystallization failure portions in product sheet | Remarks |
|---|---|---|---|---|---|---|---|---|---|---|---|
| | Width reduction amount (mm) | Widthwise central portion temperature Tc (°C) | Widthwise edge portion temperature Te (°C) | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | | |
| A-1 | 20 | 990 | 963 | 27 | 21 | 5 | 5 | 4 | -1 | 30 | Comparative Example |
| A-2 | 20 | 984 | 922 | 62 | 18 | 5 | 5 | 4 | -1 | >30 | Comparative Example |
| A-3 | 20 | 981 | 889 | 92 | 27 | 5 | 5 | 4 | -1 | 10 | Comparative Example |
| A-4 | 20 | 981 | 959 | 22 | 23 | 7 | 7 | 6 | -1 | 20 | Comparative Example |
| A-5 | 20 | 984 | 921 | 63 | 21 | 7 | 7 | 6 | -1 | 10 | Comparative Example |
| A-6 | 20 | 979 | 878 | 101 | 26 | 7 | 7 | 6 | -1 | 10 | Comparative Example |
| A-7 | 20 | 977 | 958 | 19 | 22 | 10 | 10 | 9 | -1 | 10 | Comparative Example |
| A-8 | 20 | 983 | 930 | 53 | 16 | 10 | 11 | 10 | -1 | 10 | Comparative Example |
| A-9 | 20 | 985 | 888 | 97 | 21 | 10 | 11 | 8 | -3 | 25 | Comparative Example |
| A-10 | 20 | 978 | 954 | 24 | 20 | 15 | 16 | 13 | -3 | 10 | Comparative Example |
| A-11 | 20 | 985 | 919 | 66 | 20 | 15 | 15 | 13 | -2 | 10 | Comparative Example |
| A-12 | 20 | 982 | 880 | 102 | 17 | 15 | 15 | 12 | -3 | 10 | Comparative Example |

(continued)

| No. | After hot width reduction and horizontal rolling | | | | | Hot-band annealing | | | | Maximum width (mm) of secondary recrystallization failure portions in product sheet | Remarks |
|---|---|---|---|---|---|---|---|---|---|---|---|
| | Width reduction amount (mm) | Widthwise central portion temperature Tc (°C) | Widthwise edge portion temperature Te (°C) | Tc-Te (°C) | Maximum depth (mm) of edge cracks in hot-rolled sheet | Average temperature rise rate R(°C/s) over entire width | Temperature rise rate Rc(°C/s) of widthwise central portion | Temperature rise rate Re (°C/s) of widthwise edge portion | Re-Rc (°C/s) | | |
| B-1 | 50 | 988 | 958 | 30 | 8 | 5 | 5 | 4 | -1 | >30 | Comparative Example |
| B-2 | 50 | 979 | 919 | 60 | 6 | 5 | 5 | 4 | -1 | 30 | Comparative Example |
| B-3 | 50 | 981 | 869 | 112 | 4 | 5 | 5 | 4 | -1 | 30 | Comparative Example |
| B-4 | 50 | 979 | 955 | 24 | 6 | 7 | 7 | 6 | -1 | 15 | Invention Example |
| B-5 | 50 | 985 | 915 | 70 | 7 | 7 | 7 | 6 | -1 | 25 | Comparative Example |
| B-6 | 50 | 988 | 882 | 106 | 6 | 7 | 7 | 5 | -2 | 25 | Comparative Example |
| B-7 | 50 | 980 | 964 | 16 | 5 | 10 | 11 | 10 | -1 | 15 | Invention Example |
| B-8 | 50 | 984 | 915 | 69 | 6 | 10 | 11 | 10 | -1 | 15 | Invention Example |
| B-9 | 50 | 985 | 875 | 110 | 7 | 10 | 10 | 8 | -2 | 30 | Comparative Example |
| B-10 | 50 | 984 | 963 | 21 | 8 | 15 | 15 | 14 | -1 | 10 | Invention Example |
| B-11 | 50 | 987 | 923 | 64 | 8 | 15 | 16 | 13 | -3 | 10 | Invention Example |
| B-12 | 50 | 983 | 870 | 113 | 6 | 15 | 15 | 13 | -2 | 15 | Invention Example |

7

The hot-rolled sheet was then subjected to hot-band annealing including soaking treatment at 1150°C for 120 seconds and cooling with water from 800°C to 350°C at a rate of 50°C/s. The average temperature rise rate R (°C/s) in the width direction, the temperature rise rate Rc (°C/s) in the widthwise central portion, and the temperature rise rate Re (°C/s) in the widthwise edge portion of the sheet in the temperature range of 700 to 900°C during the heating process of the hot-band annealing of each steel sheet were varied as shown in Table 1. Note that the temperature rise rate in the width direction of the sheet corresponds to the average temperature rise rate of the sheet over its entire width, while the temperature rise rate in the widthwise edge portion of the sheet is the lower one of the temperature rise rates in the portions 30 mm inward from the both widthwise edge portions of the sheet.

The steel sheet after the hot-band annealing was then subjected to pickling to remove scales on its surface and then cold rolling to form a cold-rolled sheet with a final thickness of 0.27 mm. The cold-rolled sheet was subjected to primary recrystallization annealing, which also serves as decarburization annealing performed at 800°C for 60 seconds under a wet atmosphere containing $H_2$ and $N_2$ with a dew point of 50°C. After an annealing separator composed mainly of MgO was applied to each surface of the steel sheet at 5 g/m$^2$ and dried, the steel sheet was wound into a coil. After secondary recrystallization was completed, the steel sheet was subjected to finishing annealing, in which the steel sheet was held at a temperature of 1240°C for 5 hours for purification treatment. Note that the finishing annealing was performed in an atmosphere composed mainly of $H_2$ in the temperature range of 1050°C or higher. Next, unreacted portions of the annealing separator were removed from the surface of the steel sheet after the finishing annealing, and then a phosphate-based insulating coating of a tension-imparting type was applied to the surface of the steel sheet. Then, flattening annealing, which also serves to bake the coating and correct the shape of the steel sheet was performed to obtain a product sheet.

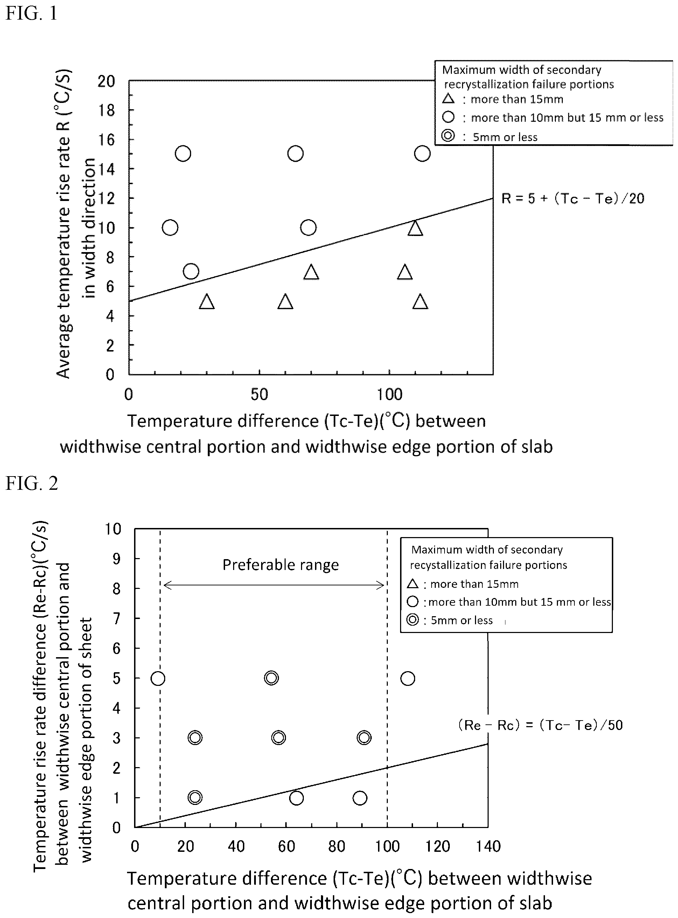

Both widthwise edge portions of each of the front-end portion (outermost portion of the coil) and the rear-end portion (innermost portion of the coil) of the obtained product sheet coil were subjected to an SEM-EBSD method to measure the crystal orientations, so that the maximum width of the secondary recrystallization failure portions in each coil was determined. Table 1 also shows the results. FIG. 1 shows the relationship between (Tc - Te), R, and the maximum width of the secondary recrystallization failure portions of each coil with a width reduction amount of 50 mm on each side. The results can confirm that it is possible to prevent the occurrence of edge cracks during hot rolling and also to suppress secondary recrystallization failure in the widthwise edge portions of a product sheet, by controlling the width reduction performed before the hot rolling, the surface temperature of the slab after the width reduction, and the temperature rise rate in the hot-band annealing, which is the first annealing performed after the hot rolling, so as to satisfy the following Expression (1):

$$R \geq 5 + (Tc - Te)/20 \ ...(1)$$

Note that the depth (distance from the widthwise edge portion) of the secondary recrystallization failure portion, which has occurred in the widthwise edge portion of the product sheet, is obtained by taking a sample having a width of 30 mm from each widthwise edge portion of the front-end portion (the outermost portion of the coil) and the rear-end portion (the innermost portion of the coil) of each product sheet coil; removing the coating from the sample; applying a tape to one side surface of the sample; performing chemical polishing on the other side surface of the sample to reduce the thickness to the central layer in the thickness direction; subjecting the side surface to polishing, such as diamond polishing, alumina polishing, or colloidal silica polishing to have a mirror surface; and then measuring the crystal orientation by the SEM-EBSD method. Specifically in the present invention, a sample obtained using an EBSD measurement system manufactured by EDAX Inc. was subjected to measurement on a region having a size of 2 mm (in the rolling direction) × 30 mm (in the width direction) in steps of 1 μm by adjusting the surface state of each sample, the SEM conditions, and the EBSD conditions so that an index of confidence (Confidence Index) > 0.1 was obtained in a region of 95% or more of the entire measurement region. The obtained data were then analyzed using OIM Analysis manufactured by EDAX Inc., so that recrystallized grains each having an orientation angle difference of within 20° from {110} <001> and also having a grain size of 1 mm or more were determined as secondary recrystallized grains, and the other regions were determined as secondary recrystallization failure portions. The distance of the region where the secondary recrystallization failure has occurred from the widthwise edge portion of the sheet was regarded as the depth of the secondary recrystallization failure portion. Then, the maximum value of the depths of the secondary recrystallization failure portions in both widthwise edge portions of each of the front-end portion and the rear-end portion of the product sheet was determined as the maximum width of the secondary recrystallization failure portions of the coil.

As described above, it is possible to suppress the occurrence of secondary recrystallization failure, which is likely to occur in the widthwise edge portion of a product sheet. This can be achieved by controlling the average temperature rise rate R in the width direction of the steel sheet in the temperature range of 700 to 900°C during the heating process of the first annealing to be performed on the steel sheet after the hot rolling, to be in an appropriate range, in accordance with (Tc - Te) of the slab after the width reduction and horizontal rolling in the slab heating step, that is, by increasing the temperature rise rate in the heating process of the first annealing to be performed after the hot rolling when the temperature of the widthwise edge portion of the slab is low. The inventors consider that the reason for this is as follows.

The widthwise edge portion of the slab that underwent a temperature drop during the slab heating step remains at a low temperature, compared with the widthwise central portion of the slab even when the slab is heated to a high temperature thereafter. Further, even if the widthwise edge portion of the slab has reached a predetermined soaking temperature, its soaking time is shorter than that of the widthwise central portion of the slab. Thus, inhibitors are not in a completely dissolved state in the widthwise edge portion of the slab. As a result, the amount of precipitates (inhibitor) to be finely and uniformly precipitated during the hot rolling step is small, and it is thus presumably difficult to impart a difference in mobility to the grain boundaries between the Goss-orientated grains and the other oriented grains, with the result that the Goss-orientated grains are difficult to develop secondary recrystallization. However, if the temperature rise rate in the heating process of the first annealing performed after the hot rolling is increased as described above, the size of precipitates to be additionally precipitated becomes fine. Thus, it is presumably possible to provide a difference in mobility to the grain boundaries and thus reduce secondary recrystallization failures.

<Experiment 2>

Nine steel slabs were produced, each having a thickness of 260 mm and having the ingredient composition including C: 0.08 mass%, Si: 3.7 mass%, Mn: 0.06 mass%, sol. Al: 0.028 mass%, N: 0.009 mass%, and S: 0.025 mass%, with the balance being Fe and unavoidable impurities. The slabs were then charged into a heating furnace to be heated to 1250°C, taken out from the heating furnace, and subjected to width reduction of 200 mm on each side, followed by horizontal rolling to flatten a dog-bone shape of the slab. In this process, the amount of temperature drop at the widthwise edge portion of the slab was varied by changing the contact time of the slab with the width reduction apparatus during the width reduction. The temperature Tc (°C) of the widthwise central portion and the temperature Te (°C) of the widthwise edge portion of each slab after the width reduction and horizontal rolling were measured, the results of which are shown in Table 2. After that, each slab was charged into the heating furnace again to be heated to 1300°C, held at that temperature for 120 minutes, and then taken out of the heating furnace to be subjected to hot rough rolling to obtain a sheet bar with a thickness of 30 mm. The obtained sheet bar was subjected to hot finishing rolling to form a hot-rolled sheet with a thickness of 3.0 mm, cooled with water, and then wound into a coil at a temperature of 700°C. In this process, both widthwise edge portions of the hot-rolled sheet were continuously photographed in-line at the exit side of the hot finishing rolling mill. The maximum width of the edge cracks generated in the widthwise edge portions of the sheet was measured from the obtained images, and the results are shown in Table 2. As can be seen from Table 2, the maximum width of the edge cracks is reduced to 10 mm or less in each hot-rolled sheet.

The hot-rolled sheet was subjected to pickling to remove scales from the surface without hot-band annealing and then to a first cold rolling step to achieve an intermediate thickness of 0.7 mm. The resulting sheet was then subjected to intermediate annealing that involves soaking treatment at 1000°C for 60 seconds and cooling with water at a rate of 30°C/s from 800°C to 350°C, pickling to remove scales from the surface, and a second cold rolling step to obtain a cold-rolled sheet with a final thickness of 0.23 mm. In this process, the average temperature rise rate R (°C/s) in the width direction, the temperature rise rate Rc (°C/s) of the widthwise central portion, and the temperature rise rate Re (°C/s) of the widthwise edge portion of the sheet in the temperature range of 700 to 900°C during the heating process of the intermediate annealing were changed as shown in Table 2.

The cold-rolled sheet was then subjected to primary recrystallization annealing, which serves as decarburization annealing performed at 900°C for 120 seconds under a wet atmosphere containing $H_2$ and $N_2$ with a dew point of 60°C, coated with an annealing separator composed mainly of MgO at 3 $g/m^2$ on each surface, dried, and wound into a coil. After secondary recrystallization was completed, the steel sheet was subjected to finishing annealing involving purification treatment by holding the sheet at a temperature of 1150°C for 20 hours. Note that the finishing annealing was performed in an atmosphere composed mainly of $H_2$ for the temperature range of 900°C or higher. Next, unreacted portions of the annealing separator were removed from the steel sheet surface after the finishing annealing, and a phosphate-based insulating coating of a tension-imparting type was applied to the steel sheet surface. Then, flattening annealing also serving to bake the film and correct the shape of the steel sheet was performed to obtain a product sheet.

Both widthwise edge portions of each of the front-end portion and the rear-end portion of the thus-obtained product sheet coil were subjected to an SEM-EBSD method as in Experiment 1 described above to measure the crystal orientations, so that the maximum width of secondary recrystallization failure portions in each coil was determined. Table 2 shows the results. Further, FIG. 2 shows the relationship between (Re - Rc), (Tc - Te), and the maximum width of the secondary recrystallization failure portions. The results show that the secondary recrystallization failure at the widthwise edge portion of a final product sheet can be significantly suppressed by controlling the slab surface temperature during width reduction before hot rolling, and the temperature rise rate in intermediate annealing, which is the first annealing performed after the hot rolling to satisfy the following Expressions (2) to (4):

$$\mathrm{Re} \geq \mathrm{Rc} \ ...(2),$$

$$10 \leq (\mathrm{Tc} - \mathrm{Te}) \leq 100 \ ...(3),$$

and

$$(\mathrm{Re} - \mathrm{Rc}) \geq (\mathrm{Tc} - \mathrm{Te})/50 \ ...(4)$$

[Table 2]

| № | After hot width reduction and horizontal rolling | | | Maximum depth (mm) of edge cracks in hot-rolled sheet | Hot-band annealing | | | | Maximum width (mm) of secondary recrystallization failure portions in product sheet | Remarks |
|---|---|---|---|---|---|---|---|---|---|---|
| | Widthwise central portion temperature Tc (°C) of slab | Widthwise edge portion temperature Te (°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | | |
| 1 | 1187 | 1163 | 24 | 5 | 10 | 10 | 11 | 1 | 10 | Invention Example |
| 2 | 1192 | 1128 | 64 | 5 | 10 | 10 | 11 | 1 | 10 | Invention Example |
| 3 | 1188 | 1099 | 89 | 6 | 10 | 10 | 11 | 1 | <5 | Invention Example |
| 4 | 1193 | 1169 | 24 | 7 | 11 | 10 | 13 | 3 | 5 | Invention Example |
| 5 | 1179 | 1122 | 57 | 7 | 11 | 10 | 13 | 3 | 5 | Invention Example |
| 6 | 1185 | 1094 | 91 | 6 | 11 | 10 | 13 | 3 | <5 | Invention Example |
| 7 | 1190 | 1181 | 9 | 5 | 12 | 10 | 15 | 5 | <5 | Invention Example |
| 8 | 1188 | 1134 | 54 | 6 | 12 | 10 | 15 | 5 | <5 | Invention Example |
| 9 | 1196 | 1088 | 108 | 5 | 12 | 10 | 15 | 5 | <5 | Invention Example |

The reason why it is possible to suppress secondary recrystallization failure that would occur in the widthwise edge portion of a final product sheet when the temperature of the widthwise edge portion of the slab is low, by increasing the temperature rise rate in the heating process of the first annealing performed after the hot rolling, is as described in <Experiment 1>. The inventors further consider as follows the reason for achieving more significant effects of the present invention when the temperature rise rate at the widthwise edge portion is positively increased more than that at the widthwise central portion of the sheet during the heating process of the first annealing performed after the hot rolling, and the heating is controlled so as to satisfy Expressions (2) to (4) above.

It is possible to minimize the difference in the precipitation behavior of the inhibitors in the width direction after horizontal rolling, by controlling the difference in temperature between the widthwise central portion and widthwise edge portion of the slab after width reduction and horizontal rolling in the hot rolling step to be in the range of Expression (3). In addition, it is also possible to form fine precipitates to be additionally precipitated in the heating process by increasing the temperature rise rate at the widthwise edge portion more than that at the widthwise central portion of the sheet during the heating process of the first annealing performed after the hot rolling as in Expression (2) and also controlling them to satisfy the range of Expression (4). This can significantly enhance the effect of reducing secondary recrystallization failure in the finishing annealing step.

Next, the reasons for limiting the ingredient composition of a steel raw material (slab), which is used for producing a grain-oriented electrical steel sheet of the present invention, will be described.

C: 0.02 to 0.10 mass%

C is an ingredient necessary for improving the texture of a hot-rolled sheet by utilizing the austenite-ferrite transformation that occurs during hot rolling and during the soaking treatment in hot-band annealing. If the C content is less than 0.02 mass%, the grain boundary strengthening effect of C will be lost, causing defects that will adversely affect the production, such as cracks in the slab. Meanwhile, the C content exceeding 0.10 mass% will not only increase the load of the decarburization treatment but also cause incomplete decarburization, which may result in magnetic aging of the product sheet. Therefore, the C content should be in the range of 0.02 to 0.10 mass%, preferably in the range of 0.03 to 0.08 mass%.

Si: 2.5 to 5.5 mass%

Si is a quite effective ingredient for increasing the specific resistance of steel and thus reducing eddy current losses, which is a part of iron losses. When the Si content is less than 2.5 mass%, the reducing effect is small, and thus, excellent iron loss properties cannot be obtained. Meanwhile, although the specific resistance of steel monotonically increases with the Si content up to 11 mass%, workability significantly decreases with the Si content above 5.5 mass%, which makes it difficult to perform production by rolling. Therefore, the Si content should be in the range of 2.5 to 5.5 mass%, preferably in the range of 3.0 to 4.0 mass%.

Mn: 0.01 to 0.30 mass%

Mn forms MnS and MnSe, which function as inhibitors to suppress normal grain growth in the heating process of the finishing annealing. Thus, Mn is an important ingredient for producing a grain-oriented electrical steel sheet. However, if the Mn content is less than 0.01 mass%, the absolute amount of the obtained inhibitors will be insufficient to suppress the normal grain growth. Meanwhile, if the Mn content exceeds 0.30 mass%, it will be difficult to achieve sufficient dissolution by heating the slab. This results in deterioration of the magnetic properties. Therefore, the Mn content should be in the range of 0.01 to 0.30 mass%, preferably in the range of 0.05 to 0.20 mass%.

At least one of S and Se: 0.001 to 0.040 mass% in total

S and Se are combined with Mn to form MnS and MnSe, respectively, which function as inhibitors. However, if the total content of S and Se is less than 0.001 mass%, the amount of the obtained inhibitors will be insufficient, and thus a sufficient effect of improving the magnetic properties cannot be obtained. Meanwhile, if the total content of S and Se exceeds 0.040 mass%, it will be difficult to achieve sufficient dissolution by heating the slab, and thus the magnetic properties will be significantly deteriorated. In addition, if the S content exceeds 0.040 mass%, edge cracks will occur during the hot rolling. Thus, to achieve excellent magnetic properties and productivity, the total content of S and Se should be in the range of 0.001 to 0.040 mass%. preferably in the range of 0.002 to 0.015 mass%.

sol. Al: 0.010 to 0.040 mass%

Al forms AlN to be precipitated which functions as an inhibitor for suppressing the normal grain growth during the secondary recrystallization annealing, and thus is an important ingredient for a grain-oriented electrical steel sheet. However, if the Al content in terms of acid-soluble Al (sol. Al) is less than 0.010 mass%, the absolute amount of the obtained inhibitors will be insufficient to suppress the normal grain growth. Meanwhile, if the Al content in terms of sol. Al exceeds 0.040 mass%, it will be difficult to achieve sufficient dissolution by heating the slab, and thus, fine dispersion of the inhibitors in the steel cannot be achieved. This results in a significant deterioration of the magnetic properties. Therefore, the Al content in terms of sol. Al should be in the range of 0.010 to 0.040 mass%, preferably in the range of 0.015 to 0.030 mass%.

N: 0.004 to 0.020 mass%

N combines with Al and precipitates to form AlN functioning as an inhibitor. If the N content is less than 0.004 mass%, the absolute amount of the obtained inhibitor will be insufficient to suppress the normal grain growth. Meanwhile, if the N content is more than 0.020 mass%, the slab may suffer blistering during the hot rolling. Therefore, the N content should be in the range of 0.004 to 0.020 mass%, preferably in the range of 0.006 to 0.010 mass%.

The steel raw material used in the present invention may contain the following ingredients in addition to the above essential ingredients.

At least one selected from the group consisting of Ni: more than 0 mass% but 1.00 mass% or less, Sb: more than 0 mass% but 0.50 mass% or less, Sn: more than 0 mass% but 0.50 mass% or less, Cu: more than 0 mass% but 0.50 mass% or less, Cr: more than 0 mass% but 0.50 mass% or less, P: more than 0 mass% but 0.50 mass% or less, Mo: more than 0 mass% but 0.50 mass% or less, Nb: more than 0 mass% but 0.020 mass% or less, V: more than 0 mass% but 0.010 mass% or less, B: more than 0 mass% but 0.0025 mass% or less, Bi: more than 0 mass% but 0.50 mass% or less, and Zr: more than 0 mass% but 0.10 mass% or less.

The above ingredients are effective in improving the magnetic properties and may be contained as appropriate. However, if the addition amount of each ingredient exceeds its upper limit described above, the development of secondary recrystallized grains will be suppressed, resulting in the deterioration of the magnetic properties. Thus, they should be added within the above ranges, when added.

Co: more than 0 mass% but 0.0200 mass% or less

Co may be contained as appropriate as it is an ingredient effective in improving the primary recrystallization texture and improving the magnetic properties of a product sheet. However, if Co is added to exceed the upper limit described above, the above effect of improving the magnetic properties will be saturated, and the cost of the raw materials will increase. Therefore, Co is preferably added within the above range, when added.

At least one element selected from the group consisting of Ti: more than 0 mass% but 0.0200 mass% or less, and W: 0.001 to 0.050 mass%

Ti and W form fine carbide and nitride and reduce the crystal grain size after annealing. These elements have the effects of improving brittleness and reducing troubles associated with sheet threading and may be contained as appropriate. However, if they are added to exceed the respective upper limits described above, the above effects will be saturated, and the cost of the raw materials will increase. Therefore, these elements are preferably added within the above ranges, when added.

At least one selected from the group consisting of Zn: more than 0 mass% but 0.0200 mass% or less, Pb: more than 0 mass% but 0.0100 mass% or less, As: more than 0 mass% but 0.020 mass% or less, Ag: more than 0 mass% but 0.200 mass% or less, Au: more than 0 mass% but 0.200 mass% or less, Ga: more than 0 mass% but 0.0200 mass% or less, Ge: more than 0 mass% but 0.0200 mass% or less, Ca: more than 0 mass% but 0.0200 mass% or less, Mg: more than 0 mass% but 0.0200 mass% or less, REM: more than 0 mass% but 0.0200 mass% or less, and Hf: more than 0 mass% but 0.020 mass% or less

The above elements may be contained as appropriate because they have the effects of strengthening the grain boundaries and reducing defects resulting from damage to the grain boundaries, by being highly concentrated at the crystal grain boundaries or by forming compounds. However, if they are added to exceed the respective upper limits described above, the above effects will be saturated, and the cost of the raw materials will increase. Therefore, they are preferably added within the above ranges, when added.

Note that a steel slab used in the present invention also contains Fe and unavoidable impurities as the balance, in addition to the above ingredients. Herein, the unavoidable impurities refer to elements that are unavoidably mixed during the steelmaking process, such as those from raw materials, scraps, and a steelmaking ladle.

Next, a method for producing a grain-oriented electrical steel sheet of the present invention will be described.

A steel raw material (slab) used for producing a grain-oriented electrical steel sheet of the present invention may be produced by melting steel having the above ingredient composition using a commonly known refining process and then subjecting it to a commonly known ingot-making method or a continuous casting method. Alternatively, a thin cast slab having a thickness of 100 mm or less may be produced using a direct casting process.

The above slab or thin cast slab is heated by an ordinary process and then hot-rolled. The slab heating temperature before the hot rolling should be 1300°C or higher to achieve complete dissolution of the inhibitor-forming ingredients. The slab may be heated to 1300°C or higher using a single heating furnace or using two or more heating furnaces. The heating method can adopt known methods, including a combustion-gas heating method, an electric heating method, and an induction heating method.

In the present invention, it is important to heat the slab to a temperature within the range of 900 to 1300°C during the slab heating, apply width reduction in the range of 50 to 200 mm on each side, and further flatten a dog-bone shape produced during the width reduction by performing horizontal rolling (horizontal reduction). Performing width reduction and horizontal rolling can achieve finer crystal grain size at the widthwise edge portion of the slab, thus significantly reducing edge cracks in the subsequent hot rolling step. To achieve such an effect of preventing edge cracks, width reduction of 50 mm or more on each side is required. However, since excessive width reduction will hamper the productivity, the upper limit of the width reduction amount should be about 200 mm, preferably in the range of 100 to 150 mm.

Note that the width reduction method is not limited to a specific method as long as it meets the intent of the process. For example, a known working technology that involves the use of a press, vertical rolls, or an edger can be used.

The horizontal rolling subsequent to the width reduction is performed for a flattening purpose by correcting the dog-bone shape formed by the width reduction. Such horizontal rolling may be performed under high pressure within the range that does not affect productivity.

The slab or the thin cast slab subjected to the width reduction and horizontal rolling is then heated to a high temperature of 1300 to 1450°C for 0 to 120 minutes, and subjected to hot rolling which includes rough rolling and finishing rolling. The rough rolling is preferably performed under the conditions of 1 or more passes at a temperature in the range of 1100 to 1400°C. The finishing rolling following the rough rolling is preferably performed under the conditions of 2 or more passes at a temperature in the range of 800 to 1300°C so as to optimize the texture of the hot-rolled sheet. In addition, the coil winding following the finishing rolling is preferably performed at a temperature in the range of 400 to 750°C, or more preferably, in the range of 500 to 700°C, from the viewpoint of controlling the morphology of carbide to be precipitated and preventing cracks in the steel sheet, for example.

The steel sheet after the hot rolling (hot-rolled sheet) is preferably subjected to hot-band annealing involving soaking treatment by holding the steel sheet at a temperature of 900 to 1250°C for 5 seconds or longer, from the viewpoint of obtaining a uniform texture of the steel sheet and reducing variation in the magnetic properties. The soaking treatment is more preferably conducted by holding the steel sheet under the conditions of a temperature of 950 to 1150°C for 10 to 180 seconds. After the soaking treatment, the steel sheet is preferably cooled at a cooling rate of 5 to 100°C/s in the temperature range of 800°C to 350°C from the viewpoint of optimizing the configurations of the second phase and the precipitates. More preferably, the cooling rate is 15 to 80°C/s.

The steel sheet after the hot rolling or hot-band annealing (hot-rolled sheet) is preferably subjected to descaling to remove an oxide film formed on the surface of the steel sheet during the hot rolling. The descaling method can be a known method, such as a method of pickling the steel sheet with a heated acid, a mechanical descaling method for mechanically removing scales, and a combination of the above methods.

The hot-rolled sheet after the removal of scales is subjected to one cold rolling step or two or more cold rolling steps with intermediate annealing between each step to obtain a cold-rolled sheet with the final thickness. The intermediate annealing is preferably performed under the soaking condition of a temperature of 900 to 1250°C for 5 seconds or longer. If the soaking temperature is lower than 900°C, the resulting recrystallized grains will become too fine, so that the Goss nuclei in the primary recrystallization texture may decrease, resulting in deterioration of the magnetic properties. Meanwhile, if the soaking temperature is higher than 1250°C, the inhibitors will rapidly grow or decompose, which may also result in deterioration of the magnetic properties. Therefore, the intermediate annealing is more preferably performed under the conditions of a temperature of 900 to 1150°C for 10 to 180 seconds.

The cooling after the soaking treatment is preferably performed from 800°C to 350°C at a rate of 5 to 100°C/s from the viewpoint of controlling the configurations of the second phase and the precipitates. More preferably, the cooling rate is 15 to 80°C/s. It is preferable to remove rolling oil before intermediate annealing when it is performed. The steel sheet after the intermediate annealing is preferably subjected to descaling to remove scales on the surface of the steel sheet generated during the annealing. The descaling method can be a known method, such as a method of pickling the steel sheet with a heated acid, a mechanical descaling method for mechanically removing scales, or a combination of the above methods.

It is important in the present invention to appropriately control the average temperature rise rate in the temperature range of 700 to 900°C in the heating process of the first annealing to be performed on the steel sheet after the hot rolling. Specifically, it is necessary to control the temperature difference (Tc-Te) (°C) between the widthwise central portion and the widthwise edge portion, which was caused by the width reduction and horizontal rolling of the slab, and the average temperature rise rate R (°C/s) in the temperature range of 700 to 900°C in the width direction of the steel sheet in the first annealing after the hot rolling to satisfy the following Expression (1):

$$R \geq 5 + (Tc - Te)/20 \ ...(1)$$

It is also important in the present invention that, provided that the temperature rise rate of the widthwise central portion and temperature rise rate from 700 to 900°C of the widthwise edge portion during the heating process of the first annealing performed on the steel sheet after the hot rolling are represented by Rc (°C/s) and Re (°C/s), respectively, Rc and Re preferably satisfy the following Expression (2):

$$Re \geq Rc \ (2)$$

It is further important in the present invention that, in the first annealing performed on the steel sheet after the hot rolling, Tc and Te preferably satisfy the following Expression (3):

$$10 \leq (Tc - Te) \leq 100 \ ...(3),$$

and
Rc and Re preferably satisfy the following Expression (4):

$$(Re - Rc) \geq (Tc - Te)/50 \ ...(4)$$

It should be noted that the first annealing performed on the steel sheet after the hot rolling refers to hot-band annealing when hot-band annealing is performed, refers to intermediate annealing when hot-band annealing is not performed but intermediate annealing is performed between each cold rolling step, and further refers to primary recrystallization annealing, which serves as decarburization annealing, performed after cold rolling when neither hot-band annealing nor intermediate annealing is performed.

The method of setting the temperature rise rate Re of the widthwise edge portion of the sheet to be faster than the temperature rise rate Rc of the widthwise central portion of the sheet is not limited to a particular method as long as the method meets the purpose. For example, a method of locally heating the widthwise edge portion of the sheet using induction heating or a burner or the like, a method of modifying the surface state of the widthwise edge portion of the sheet to increase heat absorption thereof, or a method of retaining heat in the widthwise edge portion of the sheet to suppress heat removal may be used.

In the cold rolling, a lubricant such as rolling oil is desirably used to reduce a rolling load and improve the shape of the steel sheet after the rolling. In addition, when the final thickness is obtained by a single cold rolling step, the total rolling reduction of the cold rolling step is preferably set in the range of 50 to 92%, from the viewpoint of controlling the texture. Meanwhile, when two or more cold rolling steps are performed, the total rolling reduction of each cold rolling step is preferably set in the range of 50 to 92%.

The steel sheet (cold-rolled sheet) cold-rolled to the final thickness is then subjected to primary recrystallization annealing which also serves as decarburization annealing. It is preferable to perform degreasing or pickling to clean the steel sheet surface before the primary recrystallization annealing. The decarburization annealing in the primary recrystallization annealing is preferably performed under the holding condition of a temperature of 750 to 950°C for 10 seconds or longer, or more preferably, under the holding condition of a temperature in the range of 800 to 900°C for 30 to 180 seconds. The decarburization annealing is preferably performed in a wet atmosphere containing $H_2$ and $N_2$ with a dew point of 20 to 80°C. The more preferable range of the dew point is 40 to 70°C. By conducting the decarburization annealing, the C content in the steel can be reduced to 0.0050 mass% or less, with which magnetic aging would not occur.

It is preferable to apply an annealing separator composed mainly of MgO at a coating weight of 3 g/m$^2$ or more to each surface of the steel sheet surface after the primary recrystallization annealing. The upper limit of the coating weight is not limited to a specific value, but it is preferably about 10 g/m$^2$ from the viewpoint of reducing the production costs. Note that MgO may be applied to the surface of the steel sheet in a slurry state or in a dry state by electrostatic coating. When MgO is applied in a slurry state, the slurry solution is preferably held at a constant temperature of 15°C or lower to suppress an increase in the viscosity of the slurry. In addition, the slurry solution is desirably managed by separating it into a preparation tank and an application tank to maintain a constant concentration of the slurry. Note that the phrase "composed mainly of MgO" means that the content of MgO in the entire annealing separator is 60 mass% or more.

The steel sheet coated with the annealing separator is wound into a coil, and then subjected to finishing annealing in an up-ended state to develop secondary recrystallization and also form a forsterite coating on the surface of the steel sheet. At this time, a band or the like is desirably wound on the outer periphery of the coil to prevent the unwinding of the outermost portion of the coil.

The finishing annealing is preferably performed by heating the steel sheet to a temperature of 800°C or higher to complete the secondary recrystallization. In addition, to form a forsterite coating on the steel sheet surface, the steel sheet is preferably heated to 1050°C or higher. Further, to remove the inhibitor-forming ingredients and impurities from the steel and thus obtain excellent magnetic properties, it is preferable to perform purification treatment by holding the steel sheet at a temperature of 1050 to 1300°C for 3 hours or longer. Performing such purification treatment can reduce the inhibitor-forming ingredients to the level of impurities. At this time, the atmosphere of a part of the temperature range of 800°C or higher including purification treatment of holding the steel sheet at least at a temperature of 1050 to 1300°C for 3 hours or longer preferably contains $H_2$.

The steel sheet subjected to the finishing annealing is preferably subjected to water washing, brushing, and pickling to remove unreacted portions of the annealing separator, and then preferably subjected to flattening annealing to correct curls and the like of the steel sheet that occurred during the finishing annealing and to reduce iron losses.

Note that grain-oriented electrical steel sheets are often stacked for use. To ensure the insulating property of the steel sheet in such a case, it is preferable to form an insulating coating on the steel sheet surface. A tension-imparting type insulation coating, which has the effect of reducing iron losses, is preferably adopted. The insulating coating may be formed on the surface of the steel sheet by coating the surface with a film solution and baking the film solution by flattening annealing. Alternatively, such a process may be performed on a different line. To further enhance the effect of reducing iron losses by increasing the coating adhesion, a tension-imparting type insulation coating may be formed on a binder, or a method of forming a coating by depositing an inorganic material on the surface layer of the steel sheet using a physical vapor deposition method or a chemical vapor deposition method.

From the viewpoint of further reducing iron losses, the steel sheet may be subjected to a magnetic domain subdividing treatment in any of the steps following the cold rolling, by forming grooves on the surface of the steel sheet using processes such as etching, forming an insulating coating on the surface of the steel sheet and then irradiating the surface of the steel sheet with a thermal energy beam such as a laser beam or plasma to form a thermal strain region, or pressing a roll with a protrusion against the surface of the steel sheet to form a processing strain region.

Examples

Steel slabs having a thickness of 220 mm each and having an ingredient composition containing various ingredients shown in Tables 3 with the balance being Fe and unavoidable impurities were produced. The slab was charged into a heating furnace to be heated to 1200°C, taken out from the heating furnace, and then subjected to width reduction of 100 mm on each side. The slab was then subjected to horizontal rolling to correct a dog-bone shape caused by the width reduction and flatten the shape. In this process, the amount of temperature drop at the widthwise edge portion of the slab was varied by changing the contact time of the slab with a device for the width reduction. Tables 4 show the temperature Tc (°C) of the widthwise central portion and the temperature Te (°C) of the widthwise edge portion of each slab after the width reduction and horizontal rolling, and the difference (Tc - Te) between Tc and Te. The steel slab was then charged into the heating furnace again to be heated at 1400°C for 20 minutes and subjected to hot rough rolling to form a sheet bar with a thickness of 50 mm. The obtained sheet bar was subjected to hot finishing rolling to obtain a hot-rolled sheet with a thickness of 2.8 mm, cooled with water, and then wound into a coil at a temperature of 500°C. In this process, both widthwise edge portions of the hot-rolled sheet were continuously photographed in-line on the exit side of the hot finishing rolling mill. Then, the maximum width of edge cracks generated in the widthwise edge portions of the sheet was measured from the obtained images. Tables 4 show the measurement results.

Next, the hot-rolled sheet was subjected to soaking treatment at 1000°C for 10 seconds and to hot-band annealing involving cooling with water from 800°C to 350°C at a rate of 20°C/s. Tables 4 show the average temperature rise rate R (°C/s) in the width direction, the temperature rise rate Rc (°C/s) of the widthwise central portion, and the temperature rise rate Re (°C/s) of the widthwise edge portion of the sheet in the temperature range of 700 to 900°C during the heating process of the hot-band annealing. The steel sheet after the hot-band annealing was then subjected to pickling to remove scales on the surface and to a first cold rolling step to obtain an intermediate thickness of 2.0 mm. The resulting sheet was subjected to soaking treatment at 1 100°C for 60 seconds and then to intermediate annealing involving cooling with water from 800°C to 350°C at a rate of 80°C/s. The steel sheet with the intermediate thickness was subjected to pickling to remove scales on the surface and then to a second cold rolling step to obtain a cold-rolled sheet with a final thickness of 0.23 mm.

The cold-rolled sheet was then subjected to primary recrystallization annealing, which also serves as decarburization annealing, at 850°C for 120 seconds under a wet atmosphere containing $H_2$ and $N_2$ with a dew point of 55°C. The steel sheet was coated with an annealing separator composed mainly of MgO at 8 g/m$^2$ on each surface, dried, and wound into a coil. The steel sheet wound into a coil was subjected to finishing annealing involving causing secondary recrystallization and performing purification by holding the steel sheet at a temperature of 1200°C for 10 hours. Note that the finishing annealing in the temperature range of 950°C or higher was performed in an atmosphere composed mainly of H$_2$. Next, unreacted portions of the annealing separator were removed from the surface of the steel sheet after the finishing annealing, and then a phosphate-based insulating coating of a tension-imparting type was applied to the steel sheet surface. The steel sheet was then subjected to flattening annealing to bake the coating and correct the shape of the steel sheet, thus obtaining a product sheet.

Both widthwise edge portions of the front-end portion and the rear-end portion of the obtained product sheet coil were subjected to the SEM-EBSD method to obtain crystal orientations, from which the maximum width of secondary recrystallization failure portions in each coil was determined. In addition, test pieces for the measurement of magnetic properties, in which the rolling direction coincides with the measurement direction, were collected from the innermost winding portion and the outermost winding portion of the product sheet coil across its entire width. Then, the magnetic flux density B$_8$ at a magnetizing force of 800 Aim was measured by a method described in JIS C2550-1(2011), so that the lowest value of the magnetic flux density was determined as the guaranteed value inside the coil.

The measurement results are shown in Table 4. The results show that all the grain-oriented electrical steel sheets produced by using a steel slab having the ingredient composition satisfying the present invention under the conditions satisfying the present invention have edge cracks with a size suppressed to less than 10 mm. It also shows that the maximum width of secondary recrystallization failure portions in the widthwise edge portion of the sheet was suppressed to 5 mm or less and that the magnetic flux density B$_8$ of the widthwise edge portion of the sheet was obtained as excellent as 1.93T or more.

[Table 3-1]

| № | Ingredient composition (mass%) | | | | | | | | | Remarks |
| | C | Si | Mn | sol.Al | N | S | Se | S+Se | Others | |
|---|---|---|---|---|---|---|---|---|---|---|
| 1 | 0.01 | 3.2 | 0.12 | 0.025 | 0.009 | 0.005 | 0.000 | 0.005 | - | Comparative Steel |
| 2 | 0.02 | 3.4 | 0.11 | 0.026 | 0.008 | 0.007 | 0.000 | 0.007 | - | Invention Steel |
| 3 | 0.05 | 3.2 | 0.13 | 0.027 | 0.009 | 0.006 | 0.000 | 0.006 | - | Invention Steel |
| 4 | 0.10 | 3.3 | 0.14 | 0.026 | 0.010 | 0.006 | 0.000 | 0.006 | - | Invention Steel |
| 5 | 0.12 | 3.4 | 0.12 | 0.020 | 0.008 | 0.005 | 0.000 | 0.005 | - | Comparative Steel |
| 6 | 0.04 | 2.3 | 0.11 | 0.011 | 0.011 | 0.006 | 0.000 | 0.006 | - | Comparative Steel |
| 7 | 0.06 | 2.6 | 0.15 | 0.023 | 0.009 | 0.008 | 0.000 | 0.008 | - | Invention Steel |
| 8 | 0.05 | 3.3 | 0.13 | 0.027 | 0.008 | 0.007 | 0.000 | 0.007 | - | Invention Steel |
| 9 | 0.06 | 5.3 | 0.12 | 0.025 | 0.009 | 0.003 | 0.000 | 0.003 | - | Invention Steel |
| 10 | 0.06 | 6.1 | 0.13 | 0.027 | 0.008 | 0.008 | 0.000 | 0.008 | - | Comparative Steel |
| 11 | 0.08 | 3.2 | 0.00 | 0.026 | 0.009 | 0.007 | 0.000 | 0.007 | - | Comparative Steel |
| 12 | 0.06 | 3.4 | 0.01 | 0.020 | 0.007 | 0.005 | 0.000 | 0.005 | - | Invention Steel |
| 13 | 0.05 | 3.5 | 0.13 | 0.029 | 0.009 | 0.006 | 0.000 | 0.006 | - | Invention Steel |
| 14 | 0.05 | 3.2 | 0.26 | 0.021 | 0.008 | 0.005 | 0.000 | 0.005 | - | Invention Steel |
| 15 | 0.06 | 3.4 | 0.35 | 0.029 | 0.008 | 0.006 | 0.000 | 0.006 | - | Comparative Steel |
| 16 | 0.06 | 3.4 | 0.08 | 0.005 | 0.008 | 0.007 | 0.015 | 0.022 | - | Comparative Steel |
| 17 | 0.05 | 3.3 | 0.09 | 0.011 | 0.008 | 0.006 | 0.020 | 0.026 | - | Invention Steel |
| 18 | 0.06 | 3.4 | 0.10 | 0.028 | 0.007 | 0.005 | 0.014 | 0.019 | - | Invention Steel |
| 19 | 0.07 | 3.2 | 0.12 | 0.036 | 0.008 | 0.007 | 0.018 | 0.025 | - | Invention Steel |
| 20 | 0.06 | 3.4 | 0.11 | 0.042 | 0.009 | 0.008 | 0.010 | 0.018 | - | Comparative Steel |
| 21 | 0.05 | 3.5 | 0.13 | 0.027 | 0.003 | 0.004 | 0.017 | 0.021 | - | Comparative Steel |
| 22 | 0.05 | 3.3 | 0.12 | 0.020 | 0.004 | 0.006 | 0.020 | 0.026 | - | Invention Steel |
| 23 | 0.06 | 3.4 | 0.12 | 0.026 | 0.008 | 0.008 | 0.015 | 0.023 | - | Invention Steel |

(continued)

| № | Ingredient composition (mass%) | | | | | | | | | Remarks |
|---|------|-----|------|--------|-------|-------|-------|-------|--------|-------------------|
|   | C    | Si  | Mn   | sol.Al | N     | S     | Se    | S+Se  | Others |                   |
| 24 | 0.07 | 3.3 | 0.10 | 0.027 | 0.017 | 0.004 | 0.011 | 0.015 | - | Invention Steel |
| 25 | 0.06 | 3.4 | 0.11 | 0.028 | 0.022 | 0.008 | 0.013 | 0.021 | - | Comparative Steel |
| 26 | 0.05 | 3.3 | 0.11 | 0.024 | 0.004 | 0.000 | 0.000 | 0.000 | - | Comparative Steel |
| 27 | 0.06 | 3.4 | 0.12 | 0.028 | 0.008 | 0.001 | 0.000 | 0.001 | - | Invention Steel |

[Table 3-2]

| № | Ingredient composition (mass%) | | | | | | | | | Remarks |
|---|---|---|---|---|---|---|---|---|---|---|
| | C | Si | Mn | sol.Al | N | S | Se | S+Se | Others | |
| 28 | 0.05 | 3.4 | 0.10 | 0.013 | 0.004 | 0.006 | 0.000 | 0.006 | - | Invention Steel |
| 29 | 0.07 | 3.2 | 0.12 | 0.024 | 0.009 | 0.035 | 0.000 | 0.035 | - | Invention Steel |
| 30 | 0.05 | 3.4 | 0.11 | 0.010 | 0.008 | 0.043 | 0.000 | 0.043 | - | Comparative Steel |
| 31 | 0.05 | 3.3 | 0.09 | 0.029 | 0.008 | 0.007 | 0.001 | 0.008 | - | Invention Steel |
| 32 | 0.06 | 3.4 | 0.10 | 0.023 | 0.007 | 0.006 | 0.015 | 0.021 | - | Invention Steel |
| 33 | 0.06 | 3.3 | 0.11 | 0.024 | 0.008 | 0.006 | 0.037 | 0.043 | - | Invention Steel |
| 34 | 0.05 | 3.4 | 0.10 | 0.026 | 0.009 | 0.006 | 0.044 | 0.050 | - | Comparative Steel |
| 35 | 0.06 | 3.3 | 0.12 | 0.021 | 0.008 | 0.005 | 0.010 | 0.015 | Sn:0.03,Cr:0.14,P:0.005,V:0.008,B:0.0008,Bi:0.008 | Invention Steel |
| 36 | 0.05 | 3.4 | 0.10 | 0.013 | 0.007 | 0.006 | 0.008 | 0.014 | Ni:0.05,Sn:0.15,Cu:0.15,Cr:0.05,P:0.01,Mo:0.02 | Invention Steel |
| 37 | 0.06 | 3.3 | 0.10 | 0.028 | 0.009 | 0.004 | 0.016 | 0.020 | Sb:0.02,Sn:0.23,P:0.15,Mo:0.08,V:0.005 | Invention Steel |
| 38 | 0.07 | 3.3 | 0.09 | 0.024 | 0.009 | 0.003 | 0.017 | 0.020 | Sb:0.06,Cu:0.10,Cr:0.04,P:0.01,Mo:0.01 | Invention Steel |
| 39 | 0.05 | 3.3 | 0.08 | 0.027 | 0.009 | 0.004 | 0.011 | 0.015 | Sb:0.03,Cu:0.08,P:0.01,Mo:0.02,Nb:0.004 | Invention Steel |
| 40 | 0.05 | 3.4 | 0.08 | 0.028 | 0.008 | 0.005 | 0.000 | 0.005 | Sn:0.12,Cu:0.10,P:0.02 | Invention Steel |
| 41 | 0.06 | 3.4 | 0.13 | 0.024 | 0.009 | 0.002 | 0.013 | 0.015 | Ni:0.20,Sn:0.02,P:0.05,Mo:0.05,Zr:0.08 | Invention Steel |
| 42 | 0.06 | 3.4 | 0.12 | 0.028 | 0.007 | 0.004 | 0.008 | 0.012 | Sb:0.15,Cu:0.25,Mo:0.05 | Invention Steel |
| 43 | 0.05 | 3.3 | 0.10 | 0.027 | 0.009 | 0.006 | 0.011 | 0.017 | Ni:0.05,Sn:0.25,Cr:0.27,P:0.15,Bi:0.29 | Invention Steel |
| 44 | 0.06 | 3.3 | 0.07 | 0.026 | 0.009 | 0.008 | 0.007 | 0.015 | Sn:0.40,Ni:0.78,Cr:0.02,P:0.04,Zr:0.0005 | Invention Steel |
| 45 | 0.05 | 3.4 | 0.08 | 0.016 | 0.008 | 0.006 | 0.008 | 0.014 | Sb:0.07,Cu:0.03,Cr:0.10,P:0.06,Mo:0.01 | Invention Steel |
| 46 | 0.06 | 3.3 | 0.13 | 0.026 | 0.007 | 0.007 | 0.019 | 0.026 | Sb:0.02,Cu:0.25,P:0.02,Nb:0.018 | Invention Steel |
| 47 | 0.05 | 3.3 | 0.13 | 0.024 | 0.008 | 0.002 | 0.000 | 0.002 | Sn:0.10,Cu:0.08,P:0.03,Co:0.008 | Invention Steel |
| 48 | 0.05 | 3.4 | 0.09 | 0.027 | 0.006 | 0.006 | 0.015 | 0.021 | Sb:0.04,Sn:0.12,P:0.08,V:0.004,Ti:0.003 | Invention Steel |
| 49 | 0.06 | 3.3 | 0.10 | 0.028 | 0.008 | 0.004 | 0.004 | 0.008 | Sn:0.04,Cr:0.11,P:0.006,V:0.008,Ti:0.002,W:0.02 | Invention Steel |
| 50 | 0.05 | 3.4 | 0.07 | 0.025 | 0.009 | 0.007 | 0.002 | 0.009 | Ni:0.18,Sn:0.06,Cr:0.07,P:0.05,Au:0.004,Ga:0.008,Hf:0.017,REM:0.016 | Invention Steel |
| 51 | 0.04 | 3.2 | 0.07 | 0.020 | 0.006 | 0.006 | 0.000 | 0.006 | Sn:0.04,Cu:0.17,P:0.01,Ti:0.004,Ca:0.003,As:0.016, Pb:0.003 | Invention Steel |
| 52 | 0.06 | 3.4 | 0.07 | 0.011 | 0.005 | 0.005 | 0.008 | 0.013 | Sb:0.07,Cu:0.18,Cr:0.14,P:0.02,Mo:0.01,W:0.043,Ag:0.011,Mg:0.004,Ge:0.009 | Invention Steel |

| № | Ingredient composition (mass%) | | | | | | | | | Remarks |
|---|---|---|---|---|---|---|---|---|---|---|
| | C | Si | Mn | sol.Al | N | S | Se | S+Se | Others | |
| 53 | 0.05 | 3.2 | 0.11 | 0.026 | 0.007 | 0.008 | 0.007 | 0.015 | Sb:0.03,P:0.06,Nb:0.003,Zn:0.013,REM:0.003,Pb:0.009 | Invention Steel |

[Table 4-1]

| № | After hot width reduction and horizontal rolling | | | Maximum depth (mm) of edge cracks of product sheet | Hot-band annealing | | | | Product sheet | | Remarks |
|---|---|---|---|---|---|---|---|---|---|---|---|
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 1 | 1188 | 1131 | 57 | 8 | 10 | 10 | 12 | 2 | <5 | 1.73 | Comparative Example |
| 2 | 1183 | 1127 | 56 | 8 | 10 | 9 | 12 | 3 | 5 | 1.90 | Invention Example |
| 3 | 1179 | 1129 | 50 | 6 | 12 | 11 | 13 | 2 | 5 | 1.91 | Invention Example |
| 4 | 1191 | 1123 | 68 | 8 | 12 | 12 | 14 | 2 | 5 | 1.91 | Invention Example |
| 5 | 1184 | 1130 | 54 | 18 | 10 | 10 | 11 | 1 | 5 | 1.66 | Comparative Example |
| 6 | 1180 | 1120 | 60 | 6 | 11 | 10 | 11 | 1 | 5 | 1.82 | Comparative Example |
| 7 | 1184 | 1124 | 60 | 5 | 14 | 13 | 14 | 1 | 5 | 1.91 | Invention Example |
| 8 | 1183 | 1119 | 64 | 5 | 14 | 13 | 15 | 2 | <5 | 1.90 | Invention Example |
| 9 | 1177 | 1123 | 54 | 6 | 10 | 8 | 11 | 3 | <5 | 1.90 | Invention Example |
| 10 | 1190 | 1125 | 65 | 5 | 11 | 9 | 12 | 3 | 5 | 1.77 | Comparative Example |
| 11 | 1183 | 1121 | 62 | 7 | 13 | 12 | 13 | 1 | 5 | 1.53 | Comparative Example |
| 12 | 1186 | 1118 | 68 | 5 | 12 | 12 | 12 | 0 | 5 | 1.90 | Invention Example |

21

| № | After hot width reduction and horizontal rolling | | | Maximum depth (mm) of edge cracks of product sheet | Hot-band annealing | | | | Product sheet | | Remarks |
|---|---|---|---|---|---|---|---|---|---|---|---|
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 13 | 1185 | 1123 | 62 | 6 | 10 | 10 | 12 | 2 | <5 | 1.91 | Invention Example |
| 14 | 1185 | 1124 | 61 | 5 | 11 | 10 | 13 | 3 | 5 | 1.90 | Invention Example |
| 15 | 1187 | 1124 | 63 | 5 | 9 | 8 | 11 | 3 | <5 | 1.55 | Comparative Example |
| 16 | 1176 | 1122 | 54 | 5 | 10 | 9 | 13 | 4 | <5 | 1.51 | Comparative Example |
| 17 | 1179 | 1129 | 50 | 6 | 10 | 9 | 14 | 5 | <5 | 1.90 | Invention Example |
| 18 | 1184 | 1120 | 64 | 6 | 10 | 8 | 12 | 4 | <5 | 1.91 | Invention Example |
| 19 | 1183 | 1124 | 59 | 5 | 10 | 10 | 11 | 1 | 5 | 1.91 | Invention Example |
| 20 | 1184 | 1127 | 57 | 8 | 13 | 12 | 14 | 2 | <5 | 1.52 | Comparative Example |
| 21 | 1187 | 1118 | 69 | 5 | 10 | 10 | 12 | 2 | <5 | 1.52 | Comparative Example |
| 22 | 1179 | 1116 | 63 | 5 | 12 | 12 | 12 | 0 | 5 | 1.91 | Invention Example |
| 23 | 1182 | 1134 | 48 | 4 | 10 | 10 | 16 | 6 | <5 | 1.91 | Invention Example |
| 24 | 1183 | 1128 | 55 | 6 | 10 | 8 | 13 | 5 | <5 | 1.90 | Invention Example |

(continued)

| № | After hot width reduction and horizontal rolling | | | Maximum depth (mm) of edge cracks of product sheet | Hot-band annealing | | | | Product sheet | | Remarks |
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 25 | 1173 | 1118 | 55 | 5 | 10 | 8 | 14 | 6 | <5 | 1.55 | Comparative Example |
| 26 | 1181 | 1126 | 55 | 7 | 11 | 10 | 12 | 2 | <5 | 1.83 | Comparative Example |
| 27 | 1186 | 1125 | 61 | 5 | 10 | 10 | 11 | 1 | 5 | 1.90 | Invention Example |

[Table 4-2]

| № | After hot width reduction and horizontal rolling | | | Maximum depth (mm) of edge cracks of product sheet | Hot-band annealing | | | | Product sheet | | Remarks |
|---|---|---|---|---|---|---|---|---|---|---|---|
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 28 | 1185 | 1127 | 58 | 6 | 10 | 9 | 15 | 6 | <5 | 1.91 | Invention Example |
| 29 | 1190 | 1131 | 59 | 7 | 9 | 8 | 13 | 5 | <5 | 1.90 | Invention Example |
| 30 | 1187 | 1121 | 66 | 5 | 11 | 11 | 12 | 1 | 5 | 1.59 | Comparative Example |
| 31 | 1187 | 1128 | 59 | 6 | 13 | 12 | 15 | 3 | <5 | 1.91 | Invention Example |
| 32 | 1181 | 1123 | 58 | 7 | 9 | 8 | 15 | 7 | <5 | 1.92 | Invention Example |
| 33 | 1183 | 1120 | 63 | 5 | 10 | 9 | 13 | 4 | <5 | 1.91 | Invention Example |
| 34 | 1185 | 1123 | 62 | 5 | 10 | 9 | 12 | 3 | <5 | 1.49 | Comparative Example |
| 35 | 1183 | 1130 | 53 | 6 | 11 | 11 | 18 | 7 | <5 | 1.94 | Invention Example |
| 36 | 1182 | 1124 | 58 | 5 | 11 | 11 | 13 | 2 | 5 | 1.93 | Invention Example |
| 37 | 1187 | 1125 | 62 | 6 | 12 | 11 | 14 | 3 | <5 | 1.93 | Invention Example |
| 38 | 1180 | 1127 | 53 | 5 | 9 | 8 | 10 | 2 | <5 | 1.94 | Invention Example |
| 39 | 1179 | 1127 | 52 | 7 | 8 | 7 | 15 | 8 | <5 | 1.93 | Invention Example |

| № | After hot width reduction and horizontal rolling | | | Maximum depth (mm) of edge cracks of product sheet | Hot-band annealing | | | | Product sheet | | Remarks |
|---|---|---|---|---|---|---|---|---|---|---|---|
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 40 | 1183 | 1120 | 63 | 5 | 10 | 8 | 12 | 4 | <5 | 1.93 | Invention Example |
| 41 | 1182 | 1124 | 58 | 5 | 11 | 9 | 15 | 6 | <5 | 1.93 | Invention Example |
| 42 | 1185 | 1126 | 59 | 7 | 13 | 11 | 16 | 5 | <5 | 1.93 | Invention Example |
| 43 | 1187 | 1123 | 64 | 7 | 11 | 10 | 13 | 3 | <5 | 1.93 | Invention Example |
| 44 | 1175 | 1118 | 57 | 7 | 11 | 10 | 13 | 3 | <5 | 1.93 | Invention Example |
| 45 | 1179 | 1123 | 56 | 6 | 10 | 9 | 11 | 2 | <5 | 1.94 | Invention Example |
| 46 | 1181 | 1127 | 54 | 5 | 10 | 10 | 13 | 3 | <5 | 1.94 | Invention Example |
| 47 | 1186 | 1128 | 58 | 6 | 12 | 10 | 15 | 5 | <5 | 1.95 | Invention Example |
| 48 | 1178 | 1127 | 51 | 5 | 13 | 10 | 14 | 4 | <5 | 1.93 | Invention Example |
| 49 | 1180 | 1118 | 62 | 8 | 13 | 11 | 16 | 5 | <5 | 1.93 | Invention Example |
| 50 | 1181 | 1124 | 57 | 6 | 12 | 10 | 13 | 3 | 5 | 1.94 | Invention Example |
| 51 | 1181 | 1120 | 61 | 5 | 12 | 11 | 15 | 4 | <5 | 1.93 | Invention Example |

(continued)

| № | After hot width reduction and horizontal rolling | | | Maximum depth (mm) of edge cracks of product sheet | Hot-band annealing | | | | Product sheet | | Remarks |
|---|---|---|---|---|---|---|---|---|---|---|---|
| | Widthwise central portion temperature Tc (°C) of slab | Widthwise edge portion temperature Te(°C) of slab | Tc-Te (°C) | | Average temperature rise rate R(°C/s) over entire width | Temperature rise rate Rc(°C/s) of widthwise central portion | Temperature rise rate Re (°C/s) of widthwise edge portion | Re-Rc (°C/s) | Maximum width (mm) of secondary recrystallization failure portions in product sheet | Magnetic flux density $B_8$(T) | |
| 52 | 1185 | 1123 | 62 | 7 | 12 | 10 | 13 | 3 | <5 | 1.93 | Invention Example |
| 53 | 1177 | 1125 | 52 | 5 | 11 | 9 | 12 | 3 | <5 | 1.94 | Invention Example |

**Claims**

1. A method for producing a grain-oriented electrical steel sheet, comprising:

 heating a steel slab having an ingredient composition comprising C: 0.02 to 0.10 mass%, Si: 2.5 to 5.5 mass%, Mn: 0.01 to 0.30 mass%, sol. Al: 0.010 to 0.040 mass%, and N: 0.004 to 0.020 mass%, and further comprising at least one of S and Se: 0.001 to 0.040 mass% in total, with a balance being Fe and unavoidable impurities;
 hot rolling the steel slab;
 performing one cold rolling, or two or more times of cold rolling with an intermediate annealing between each cold rolling to obtain a cold-rolled sheet with a final thickness;
 performing primary recrystallization annealing serving as decarburization annealing;
 applying an annealing separator to a surface of the resulting steel sheet; and
 performing finishing annealing,
 **characterized in that:**

 the step of heating the steel slab comprises

 heating the steel slab to a temperature of 900 to 1300°C,
 subjecting the steel slab to width reduction of 50 to 200 mm on each side,
 subjecting the steel slab to horizontal rolling for flattening a dog-bone shape caused by the width reduction,
 reheating the steel sheet, and
 holding the steel sheet at a high temperature of 1300 to 1450°C for 0 to 120 minutes, and that

 provided that the surface temperatures of the widthwise central portion and widthwise edge portion of the slab after the width reduction and the horizontal rolling are represented by Tc (°C) and Te (°C), respectively, and that an average temperature rise rate in the width direction of the steel sheet within a temperature range of 700 to 900°C during a heating process of a first annealing performed on the steel sheet after the hot rolling is represented by R (°C/s), R satisfies the following Expression (1):

$$R \geq 5 + (Tc - Te)/20 \;...(1)$$

2. The method for producing a grain-oriented electrical steel sheet according to claim 1, wherein

 provided that the temperature rise rates of the widthwise central portion and widthwise edge portion of the steel sheet within the temperature range of 700 to 900°C during the heating process of the first annealing performed after the hot rolling are represented by Rc (°C/s) and Re (°C/s), respectively,
 Rc and Re satisfy the following Expression (2):

$$Re \geq Rc \;...(2)$$

3. The method for producing a grain-oriented electrical steel sheet according to claim 1 or 2, wherein:

 Tc and Te satisfy the following Expression (3), and
 Rc and Re satisfy the following Expression (4):

$$10 \leq (Tc - Te) \leq 100 \;...(3),$$

 and

$$(Re - Rc) \geq (Tc - Te)/50 \;...(4)$$

4. The method for producing a grain-oriented electrical steel sheet according to any one of claims 1 to 3, comprising one of the following steps:

- a hot rolling step that includes, after heating the steel slab, performing rough rolling for one or more passes in a temperature range of 1100°C to 1400°C and finishing rolling for 2 or more passes in a temperature range of 800 to 1300°C to obtain a hot-rolled sheet, and then winding the hot-rolled sheet into a coil at a winding temperature of 400 to 750°C;

- a hot-band annealing step that includes holding the sheet in a temperature range of 900 to 1250°C for 5 seconds or longer and then cooling the sheet from 800°C to 350°C at a rate of 5 to 100°C/s;

- a cold rolling step that includes performing one cold rolling step at a total rolling reduction in a range of 50 to 92% or performing two or more cold rolling steps at a total rolling reduction of each cold rolling in a range of 50 to 92%;

- an intermediate annealing step that includes holding the sheet in a temperature range of 900 to 1250°C for 5 seconds or longer, and then cooling the sheet at a rate of 5 to 100°C/s from 800°C to 350°C;

- a primary recrystallization annealing step that also serves as decarburization annealing and includes holding the sheet in a temperature range of 750 to 950°C for 10 seconds or longer under a wet atmosphere containing $H_2$ and $N_2$ and having a dew point of 20 to 80°C or less;

- an annealing separator applying step that applies 3 g/m$^2$ or more of an annealing separator composed mainly of MgO to each surface of the steel sheet; and

- a finishing annealing step that includes purification of holding the sheet at least at a temperature of 1050 to 1300°C for 3 hours or longer and is performed in an atmosphere containing $H_2$ for a part of the temperature range of 800°C or higher.

5. The method for producing a grain-oriented electrical steel sheet according to any one of claims 1 to 4, wherein the steel slab further includes, in addition to the ingredient composition, at least one selected from the group consisting of Ni: more than 0 mass% but 1.00 mass% or less, Sb: more than 0 mass% but 0.50 mass% or less, Sn: more than 0 mass% but 0.50 mass% or less, Cu: more than 0 mass% but 0.50 mass% or less, Cr: more than 0 mass% but 0.50 mass% or less, P: more than 0 mass% but 0.50 mass% or less, Mo: more than 0 mass% but 0.50 mass% or less, Nb: more than 0 mass% but 0.020 mass% or less, V: more than 0 mass% but 0.010 mass% or less, B: more than 0 mass% but 0.0025 mass% or less, Bi: more than 0 mass% but 0.50 mass% or less, and Zr: more than 0 mass% but 0.10 mass% or less.

6. The method for producing a grain-oriented electrical steel sheet according to any one of claims 1 to 5, wherein the steel slab further includes, in addition to the ingredient composition, Co: more than 0 mass% but 0.0200 mass% or less.

7. The method for producing a grain-oriented electrical steel sheet according to any one of claims 1 to 6, wherein the steel slab further includes, in addition to the ingredient composition, at least one selected from the group consisting of Ti: more than 0 mass% but 0.0200 mass% or less and W: from 0.001 to 0.050 mass%.

8. The method for producing a grain-oriented electrical steel sheet according to any one of claims 1 to 7, wherein the steel slab further includes, in addition to the ingredient composition, at least one selected from the group consisting of Zn: more than 0 mass% but 0.0200 mass% or less, Pb: more than 0 mass% but 0.0100 mass% or less, As: more than 0 mass% but 0.020 mass% or less, Ag: more than 0 mass% but 0.200 mass% or less, Au: more than 0 mass% but 0.200 mass% or less, Ga: more than 0 mass% but 0.0200 mass% or less, Ge: more than 0 mass% but 0.0200 mass% or less, Ca: more than 0 mass% but 0.0200 mass% or less, Mg: more than 0 mass% but 0.0200 mass% or less, REM: more than 0 mass% but 0.0200 mass% or less, and Hf: more than 0 mass% but 0.020 mass% or less.

FIG. 1

FIG. 2

## INTERNATIONAL SEARCH REPORT

| International application No. |
|---|
| **PCT/JP2023/004544** |

### A.  CLASSIFICATION OF SUBJECT MATTER

*C21D 8/12*(2006.01)i; *C22C 38/00*(2006.01)i; *C22C 38/60*(2006.01)i; *H01F 1/147*(2006.01)i
FI:   C21D8/12 B; C22C38/00 303U; C22C38/60; H01F1/147 175

According to International Patent Classification (IPC) or to both national classification and IPC

### B.  FIELDS SEARCHED

Minimum documentation searched (classification system followed by classification symbols)

C21D8/12; C21D9/46; C22C38/00-38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| A | JP 5-140650 A (KAWASAKI STEEL CORP) 08 June 1993 (1993-06-08)<br>   claim 1, paragraphs [0052]-[0071] | 1-8 |
| A | JP 7-224325 A (KAWASAKI STEEL CORP) 22 August 1995 (1995-08-22)<br>   claim 1, paragraphs [0037]-[0041] | 1-8 |
| A | JP 11-6015 A (KAWASAKI STEEL CORP) 12 January 1999 (1999-01-12)<br>   claim 1, paragraphs [0014]-[0016], [0036]-[0046] | 1-8 |
| A | JP 2011-219793 A (NIPPON STEEL CORP) 04 November 2011 (2011-11-04)<br>   claim 3, table 2 | 1-8 |
| A | KR 10-2006-0074646 A (POSCO) 03 July 2006 (2006-07-03)<br>   claim 1, table 2 | 1-8 |
| P, A | WO 2022/250112 A1 (JFE STEEL CORP) 01 December 2022 (2022-12-01)<br>   entire text | 1-8 |

☐ Further documents are listed in the continuation of Box C.       ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/004544**

| Patent document cited in search report | | | Publication date (day/month/year) | Patent family member(s) | | | Publication date (day/month/year) |
|---|---|---|---|---|---|---|---|
| JP | 5-140650 | A | 08 June 1993 | (Family: none) | | | |
| JP | 7-224325 | A | 22 August 1995 | (Family: none) | | | |
| JP | 11-6015 | A | 12 January 1999 | (Family: none) | | | |
| JP | 2011-219793 | A | 04 November 2011 | (Family: none) | | | |
| KR | 10-2006-0074646 | A | 03 July 2006 | (Family: none) | | | |
| WO | 2022/250112 | A1 | 01 December 2022 | JP | 7197069 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 40015644 B
- JP 51013469 A
- JP 60190520 A
- JP 58024397 U
- JP 60145318 A
- JP 55062124 A
- JP 54031024 A
- JP 3243244 A
- JP 61003837 A
- JP 60145204 A
- JP 60200916 A
- JP 61071104 A
- JP 62196328 A
- JP 5138207 A
- JP 3133501 A